# FASCICULE DE BREVET EUROPEEN

(11) **EP 2 026 006 B1**
(45) Date de publication et mention de la délivrance du brevet: **15.03.2017**
(21) Numéro de dépôt: 08161049.5
(22) Date de dépôt: 24.07.2008
(51) Int. Cl.: F23R 3/04, F02C 7/00, F04D 29/44

(54) **Turbomachine avec diffuseur**
Strömungsmaschine mit Diffusor
Turbomachine with diffuser

(30) Priorité: 13.08.2007 FR 0757051
(43) Date de publication de la demande: 18.02.2009
(73) Titulaire: SNECMA, 75015 Paris (FR)
(72) Inventeur: Commaret, Patrice, 77950 Rubelles (FR); Hernandez, Didier, 77720 Quiers (FR)
(74) Mandataire: Intès, Didier Gérard André

(56) Documents cités:
- US-A- 3 088 279
- US-A- 4 462 204
- US-A- 4 466 250
- US-A- 5 555 721
- US-A1- 2001 047 651

## Description

L'invention concerne une turbomachine. Elle se destine à tout type de turbomachine, terrestre ou aéronautique, et plus particulièrement aux turboréacteurs d'avion.

Dans la présente demande, l'amont et l'aval sont définis par rapport au sens d'écoulement normal du gaz (de l'amont vers l'aval) à travers la turbomachine. Par ailleurs, on appelle axe de la turbomachine, l'axe de rotation du rotor de la turbomachine. La direction axiale correspond à la direction de l'axe de la turbomachine, et une direction radiale est une direction perpendiculaire à cet axe. De même, un plan axial est un pian contenant l'axe de la turbomachine et un plan radial est un plan perpendiculaire à cet axe. Enfin, sauf précision contraire, les adjectifs intérieur et extérieur sont utilisés en référence à une direction radiale de sorte que la partie ou la face intérieure (i.e. radialement intérieure) d'un élément est plus proche de l'axe de la turbomachine que la partie ou la face extérieure (i.e. radialement extérieure) du même élément.

L'invention concerne une turbomachine du type comprenant :
- une chambre de combustion annulaire ;
- un compresseur centrifuge ;
- un diffuseur annulaire permettant de diffuser le courant de gaz sortant du compresseur et de diriger ce courant de gaz vers la chambre de combustion, ce diffuseur comprenant : une partie amont orientée radialement qui présente des passages de diffusion raccordés à la sortie du compresseur ; une partie intermédiaire coudée ; et une partie aval comprenant une série d'aubes de redressement circulairement espacées ; et
- un carter externe entourant extérieurement la chambre de combustion et la partie aval du diffuseur.

Un compresseur centrifuge comprend un rouet centrifuge qui permet d'accélérer le gaz qui le traverse et, donc, d'accroître l'énergie cinétique de ce gaz.

Le diffuseur présente un espace annulaire entourant le compresseur. Le diffuseur sert à réduire la vitesse du gaz quittant le compresseur et, de ce fait, à accroître sa pression statique. Les diffuseurs peuvent être du type à aubes ou du type à conduits.

Ces deux types de diffuseur comprennent une partie amont annulaire orientée radialement qui présente une série de passages de diffusion raccordés à la sortie du compresseur pour récupérer le gaz accéléré sortant de ce dernier. Ces passages de diffusion ont une section qui s'accroît progressivement de l'intérieur vers l'extérieur afin de diffuser le courant de gaz sortant du compresseur. Les diffuseurs du type à aubes utilisent une série d'aubes de diffusion espacées circulairement et formant entre elles les passages de diffusion. Dans les diffuseurs du type à conduits, les passages de diffusion sont constitués par des éléments de tuyaux ou conduits.

En aval de ladite partie amont, les diffuseurs comprennent une partie intermédiaire annulaire coudée, pour courber le trajet d'écoulement du diffuseur et ramener l'écoulement de gaz en direction de la chambre de combustion.

En aval de cette partie intermédiaire, les diffuseurs comprennent une partie aval annulaire comprenant une série d'aubes de redressement circulairement espacées, permettant de redresser l'écoulement de gaz et ainsi de réduire la giration de l'écoulement de gaz sortant des passages de diffusion, avant que cet écoulement n'entre dans la chambre de combustion.

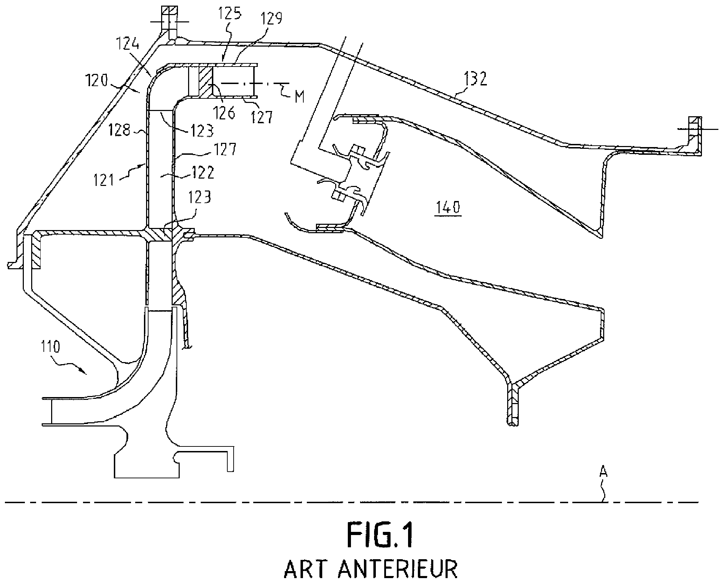

La figure 1 représente un exemple connu de turbomachine du type précité comprenant, dans le sens d'écoulement du gaz : un compresseur centrifuge 110, un diffuseur annulaire 120 à aubes de diffusion 123 et une chambre de combustion annulaire 140. Un carter externe 132 entoure extérieurement la chambre de combustion 140 et le diffuseur 120.

Le diffuseur 120 comprend : une partie amont 121 orientée radialement qui présente des passages de diffusion 122 ; une partie intermédiaire 124 coudée ; et une partie aval 125 comprenant une série d'aubes 126 de redressement circulairement espacées.

La veine de courant se définit comme étant l'enveloppe qui délimite l'espace d'écoulement du gaz, et donc le courant de gaz

La veine de courant dans les parties amont 121 et intermédiaire 124 est délimitée entre un premier flasque 127 et un deuxième flasque 128. La veine de courant dans la partie aval 126 est délimitée intérieurement par le premier flasque 127 et extérieurement par une virole externe 129.

La partie aval 125 du diffuseur est orientée parallèlement à l'axe A de la turbomachine. En d'autres termes, dans un plan de coupe contenant l'axe A de la turbomachine, l'axe moyen M de la veine de courant, en sortie de la partie aval 125 du diffuseur, est parallèle à l'axe A de la turbomachine. Suivant cette configuration, le gaz principal sortant du diffuseur contourne extérieurement la chambre de combustion 140.

Pour que le gaz principal sortant du diffuseur 120 soit dirigé vers la chambre de combustion 140, la chambre de combustion étant ainsi mieux alimentée en gaz, selon une alternative non représentée, la partie aval 125 du diffuseur est inclinée par rapport à l'axe A de la turbomachine et orientée vers la chambre de combustion 140. En d'autres termes, dans un plan de coupe contenant l'axe A de la turbomachine, l'axe moyen M de la veine de courant, en sortie de la partie aval 125 du diffuseur, forme un aigle aigu (non nul) avec l'axe A.

Les inconvénients du diffuseur de la figure 1 tiennent au fait que les pièces qui les composent sont difficiles à assembler. Notamment, lorsque la partie aval 125 est inclinée par rapport à l'axe A, la fixation de la virole externe 129 par brasage, ou par sertissage, sur la partie aval 125 est particulièrement difficile, car la surface extérieure de la partie aval 125 est conique et la virole externe 129 a tendance à glisser vers l'extrémité libre de la partie aval 126.

D'autres exemples connus de diffuseurs sont divulgués dans les brevets US 5 555 721 et US 3 088 279.

L'invention a pour but de proposer une turbomachine du type précité, ayant un diffuseur plus facile à assembler que les diffuseurs connus.

Pour atteindre ce but, l'invention a pour objet une turbomachine selon la revendication 1 comprenant notamment :
- une chambre de combustion annulaire ;
- un compresseur centrifuge ;
- un diffuseur annulaire permettant de diffuser le courant de gaz sortant du compresseur et de diriger ce courant de gaz vers la chambre de combustion, ce diffuseur comprenant : une partie amont orientée radialement qui présente des passages de diffusion raccordés à la sortie du compresseur ; une partie intermédiaire coudée ; et une partie aval comprenant une série d'aubes de redressement circulairement espacées ; et
- un carter externe entourant extérieurement la chambre de combustion et la partie aval ;
dans laquelle la veine de courant dans la partie aval est délimitée extérieurement par le carter externe.

L'invention consiste donc à utiliser le carter externe pour former la paroi extérieure de la partie aval. Ainsi, on se passe de la virole externe habituellement utilisée et on évite les problèmes liés à la fixation de cette virole. En outre, le fait de ne plus avoir de virole externe permet, généralement, de diminuer la masse du diffuseur.

De plus, selon l'invention le carter externe présente un épaulement contre lequel le bord aval extérieur de la partie intermédiaire du diffuseur vient en butée. Grâce à cet épaulement, on positionne correctement et facilement la partie intermédiaire par rapport au carter. L'assemblage du diffuseur s'en trouve facilité.

Selon un mode de réalisation particulier de l'invention, les aubes de redressement ne sont pas fixées au carter externe, ce qui simplifie encore l'assemblage du diffuseur. Dans ce cas, avantageusement, pour éviter les inconvénients liés aux phénomènes de dilatation qui interviennent lors du fonctionnement de la turbomachine, on prévoit un jeu, à froid, entre les aubes de redressement et le carter externe. A chaud, ce jeu diminue et, de préférence, devient nul ou légèrement négatif.

Selon l'invention, les parois opposées des parties amont et intermédiaire sont formées par un premier flasque et un deuxième flasque, ces premier et deuxième flasques étant distincts du carter et délimitant la veine de courant dans les parties amont et intermédiaire.

L'invention et ses avantages seront mieux compris à la lecture de la description détaillée qui suit, d'exemples de réalisation de l'invention donnés à titre illustratif et non limitatif. Cette description fait référence aux figures annexées sur lesquelles :
- la figure 1 représente de manière schématique, en demi coupe axiale, le compresseur, le diffuseur et le module chambre de combustion d'un exemple connu de turboréacteur d'avion ;
- la figure 2 est une vue en perspective du diffuseur de la figure 1 ;
- la figure 3 représente de manière schématique, en demi coupe axiale, le compresseur, le diffuseur et le module chambre de combustion d'un exemple de turboréacteur d'avion, conforme à l'invention ;
- la figure 4 représente un détail du diffuseur de la figure 3 ;
- la figure 5 représente de manière schématique, en demi coupe axiale, le compresseur, le diffuseur et le module chambre de combustion d'un autre exemple de turboréacteur d'avion, conforme à l'invention ; et
- la figure 6 représente un détail du diffuseur de la figure 5.

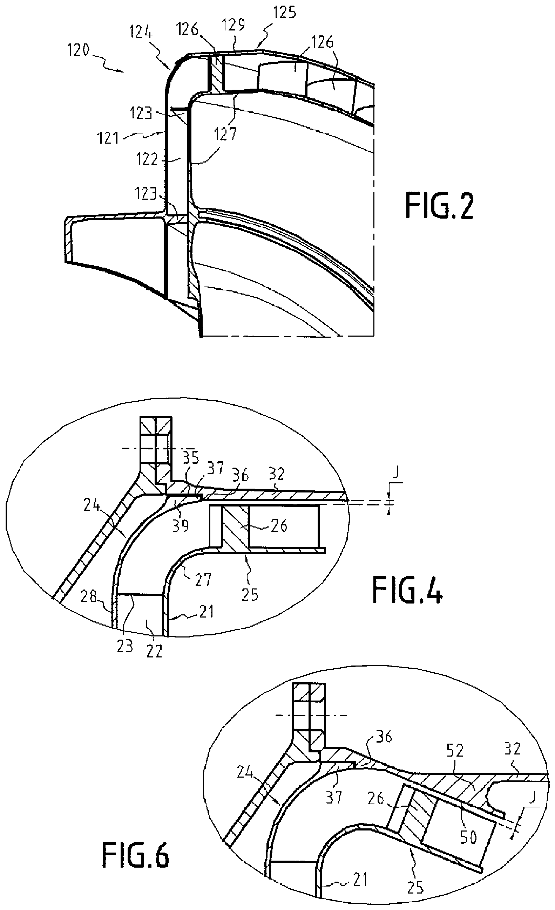

Les figures 1 et 2 qui représentent l'art antérieur, ont été précédemment décrites.

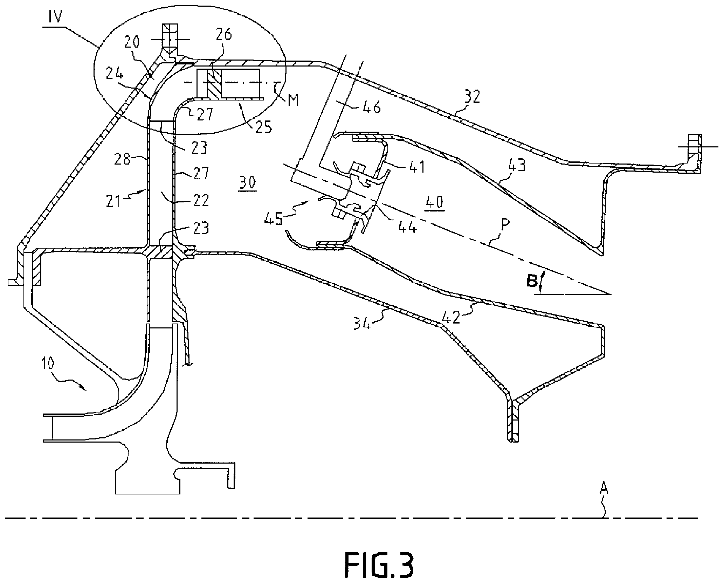

La figure 3 représente partiellement un exemple de turbomachine selon l'invention. Plus particulièrement, il s'agit d'un turboréacteur d'avion. Le gaz traversant ce turboréacteur est de l'air.

Le turboréacteur comprend un compresseur 10 haute pression centrifuge, un diffuseur 20 annulaire raccordé en aval du compresseur 10, ce diffuseur débouchant dans un espace 30 entourant une chambre de combustion 40 annulaire. Cet espace 30 est délimité par un carter extérieur 32 et un carter intérieur 34 concentriques. La chambre de combustion 40 est soutenue par des brides de fixation reliées aux carters 32 et 34.

Le compresseur 10 centrifuge comprend un rouet centrifuge. Ce rouet comprend une série d'aubes mobiles, entraînées en rotation. Ces aubes reçoivent l'air axialement, l'accélèrent et le libèrent radialement dans le diffuseur 20.

Le diffuseur 20 présente un espace annulaire entourant le compresseur 10. Le diffuseur 20 sert à réduire la vitesse de l'air quittant le compresseur 10 et, de ce fait, à accroître sa pression statique. Le diffuseur 20 des figures est du type à aubes.

Ce diffuseur 20 comprend une partie amont 21 annulaire orientée radialement qui présente une série de passages de diffusion 22 raccordés à la sortie du compresseur 10 pour récupérer l'air accéléré sortant du compresseur 10. Ces passages de diffusion 22 ont une section qui s'accroît progressivement suivant la direction radiale, de l'intérieur vers l'extérieur, afin de diffuser le courant de gaz sortant du compresseur 10. Ces passages de diffusion 22 sont formés par une série d'aubes de diffusion 23 espacées circulairement. Au niveau de l'entrée de la partie amont 21, ces aubes 23 sont proches les unes des autres. Ces aubes de diffusion 23 s'éloignent circonférentiellement les unes des autres à mesure qu'elles se rapprochent de la sortie de la partie amont 21.

En aval de la partie amont 21, le diffuseur 20 comprend une partie intermédiaire 24 annulaire coudée, pour courber le trajet d'écoulement du diffuseur et ramener l'écoulement d'air en direction de la chambre de combustion 40.

En aval de cette partie intermédiaire 24, le diffuseur 20 comprend une partie aval 25 annulaire comprenant une série d'aubes de redressement 26 circulairement espacées, pour réduire la giration de l'écoulement de gaz sortant des passages de diffusion 22, avant que cet écoulement de gaz n'entre dans l'espace 30.

Un premier flasque 27 forme la paroi intérieure de la partie aval 25, de sorte que la veine de courant dans la partie aval 25 est délimitée intérieurement par le premier flasque 27. Ce flasque 27 porte les aubes de redressement 26 (i.e. les aubes 26 sont solidaires du flasque 27).

Les parois opposées des parties amont 21 et intermédiaire 24 sont formées par le premier flasque 27 et un deuxième flasque 28. Ainsi, ces premier et deuxième flasques 27, 28, délimitent la veine de courant dans les parties amont 21 et intermédiaire 24.

Le deuxième flasque 28 porte les aubes de diffusion 23 et, lors de l'assemblage du diffuseur 20, le premier flasque 27 est brasé sur les aubes de diffusion 23.

La chambre de combustion 40 comprend une paroi intérieure 42 annulaire, une paroi extérieure 43 annulaire et un fond de chambre 41 annulaire disposé entre lesdites parois 42, 43, dans la région amont de ladite chambre. Ce fond de chambre 41 présente des orifices d'injection 44 répartis circulairement autour de l'axe A. Des systèmes d'injection 45 sont montés sur le fond de chambre, au travers desdits orifices d'injection 44 (à raison d'un système d'injection 45 par orifice d'injection 44). Ces systèmes d'injection 45 permettent d'injecter le mélange air/carburant qui est brûlé dans la chambre de combustion 40. Le carburant de ce mélange est amené jusqu'aux systèmes d'injection 45 par une conduite 46 d'alimentation en carburant traversant l'espace 30.

La chambre de combustion 40 (i.e. l'axe principal P de cette chambre) est inclinée par rapport à l'axe A du turboréacteur d'un angle aigu B (non nul). Plus cet angle aigu B est grand et plus l'encombrement axial du module chambre de combustion est réduit.

Dans l'exemple de la figure 3, la partie aval 25 du diffuseur est orientée axialement en ce sens que l'axe moyen M de la veine de courant en sortie de la partie aval 25 du diffuseur est parallèle à l'axe A.

Le carter extérieur 32 est disposé radialement à l'extérieur de la chambre de combustion 40 et de la partie aval 25 du diffuseur 20.

Conformément à l'invention, le carter extérieur 32 constitue la paroi extérieure de la partie avale 25, de sorte qu'il délimite extérieurement la veine du courant d'air dans cette partie aval 25. Plus précisément, la paroi intérieure du carter extérieur 32 délimite cette veine.

Comme représenté en détail sur la figure 4, les aubes de redressement 26 ne sont pas fixées au carter extérieur 32.

A froid, il existe un jeu J entre les aubes de redressement 26 et le carter extérieur 32. Ce jeu J diminue à mesure que le turboréacteur chauffe, en raison de la différence de dilatation entre le premier flasque 27 et les aubes 26, d'une part, et le carter extérieur 32, d'autre part. A chaud, le jeu J peut être nul, voir légèrement négatif, de sorte que les aubes 26 affleurent ou entrent légèrement en contact avec le carter extérieur 32. Ce contact est peu marqué pour ne pas endommager les aubes 26 ou le carter 32.

Le carter extérieur 32 présente un épaulement 36 contre lequel le bord aval extérieur 37 de la partie intermédiaire 24 vient en butée lors de l'assemblage du diffuseur. L'épaulement 36 est donc utilisé comme un repère et une aide au bon positionnement de la partie intermédiaire 24.

Toujours dans le but de faciliter le positionnement de la partie intermédiaire 24, la paroi extérieure 39 de la partie intermédiaire 24 est en appui sur le carter extérieur 32, l'interface d'appui 35 entre la paroi extérieure 39 et le carter étant une surface cylindrique de révolution, avec une largeur axiale significative.

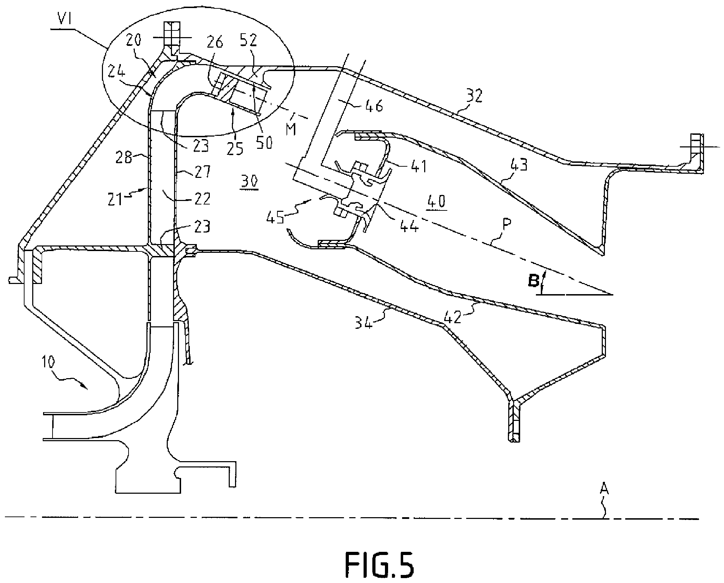

En référence aux figures 5 et 6, on va maintenant décrire un autre exemple de turboréacteur selon l'invention. Les éléments analogues entre cet exemple et celui des figures 3 et 4 portent les mêmes références numériques.

Ce turboréacteur diffère de celui des figures 3 et 4 en ce que la partie avale 25 du diffuseur est inclinée par rapport à l'axe A de la turbomachine, en direction de la chambre de combustion 40, de sorte que, dans un plan de coupe contenant l'axe A de la turbomachine, l'axe moyen M de la veine de courant en sortie de la partie aval 25 du diffuseur forme un angle aigu, non nul, avec l'axe A, cet axe moyen M passant, de préférence, par le fond de chambre 41.

Une telle inclinaison de la partie aval 25 du diffuseur 20 par rapport à l'axe A de la turbomachine permet de réduire la perte de charge des gaz entre la sortie du diffuseur 20 et la chambre de combustion 40. Elle permet également d'alimenter en gaz, de façon plus symétrique, les zones de contournement externe et interne de la chambre 40, et aussi de mieux alimenter en gaz la zone de contournement interne. Par ailleurs, l'alimentation des systèmes d'injection 45 en gaz est également plus symétrique.

Dans cet exemple, le carter extérieur 32 présente une portion de surface intérieure tronconique 50, en face des aubes de redressement 26, de sorte que cette portion de surface tronconique 50 épouse (moyennant le jeu J) le contour extérieur des aubes de redressement 26. Dans l'exemple, la portion de surface tronconique 50 a été réalisée dans une surépaisseur 52 du carter extérieur 32.

## Revendications

1. Turbomachine comprenant :
- une chambre de combustion annulaire (40) ;
- un compresseur centrifuge (10) ;
- un diffuseur annulaire (20) permettant de diffuser le courant de gaz sortant du compresseur et de diriger ce courant de gaz vers la chambre de combustion, ce diffuseur comprenant : une partie amont (21) orientée radialement qui présente des passages de diffusion (22) raccordés à la sortie du compresseur ; une partie intermédiaire (24) coudée ; et une partie aval (25) comprenant une série d'aubes de redressement (26) circulairement espacées ; et
- un carter extérieur (32) entourant extérieurement la chambre de combustion et la partie aval ;
la veine de courant dans la partie aval (25) étant délimitée extérieurement par le carter extérieur (32), le carter extérieur (32) présentant un épaulement (36) **caractérisée en ce que** le bord aval extérieur (37) de la partie intermédiaire (24) vient en butée contre ledit épaulement (36), et **en ce que** les parois opposées des parties amont (21) et intermédiaire (24) sont formées par un premier flasque (27) et un deuxième flasque (28), ces premier et deuxième flasques (27, 28) étant distincts du carter (32) et délimitant la veine de courant dans les parties amont (21) et intermédiaire (24).

2. Turbomachine selon la revendication 1, dans laquelle les aubes de redressement (26) ne sont pas fixées au carter extérieur (32).

3. Turbomachine selon la revendication 1 ou 2, dans laquelle il existe un jeu (J), à froid, entre les aubes de redressement (26) et le carter extérieur (32).

4. Turbomachine selon l'une quelconque des revendications 1 à 3, dans laquelle la paroi extérieure (39) de la partie intermédiaire (24) est en appui sur le carter extérieur (32), l'interface d'appui (35) entre cette paroi extérieure (39) et le carter (32) étant une surface cylindrique.

5. Turbomachine selon l'une quelconque des revendications 1 à 4, dans laquelle le carter extérieur (32) présente une portion de surface intérieure tronconique (50), en face des aubes de redressement (26).

6. Turbomachine selon l'une quelconque des revendications 1 à 5, dans laquelle la veine de courant dans la partie aval (25) est délimitée intérieurement par un flasque (27), ce flasque délimitant également la veine de courant dans les parties amont (21) et intermédiaire (24).

7. Turbomachine selon la revendication 6, dans laquelle ledit flasque (27) porte les aubes de redressement (26).

8. Turbomachine selon la revendication 6 ou 7, dans laquelle la partie amont (21) comprend une série d'aubes de diffusion (23) espacées circulairement et formant entre elles lesdits passages de diffusion (22), et dans laquelle le flasque (27) est brasé sur ces aubes de diffusion (23).

## Patentansprüche

1. Turbomaschine, umfassend:
- eine ringförmige Brennkammer (40),
- einen Zentrifugalkompressor (10),
- einen ringförmigen Diffusor (20), der ermöglicht, den aus dem Kompressor austretenden Gasstrom zu streuen und diesen Gasstrom in Richtung der Brennkammer zu leiten, wobei dieser Diffusor umfasst: einen radial ausgerichteten stromaufwärtigen Teil (21), der an den Ausgang des Kompressors angeschlossene Diffusionsdurchgänge (22) aufweist, einen gekrümmten Zwischenteil (24) und einen stromabwärtigen Teil (25), der eine Reihe von kreisförmig beabstandeten Richtschaufeln (26) umfasst, und
- ein Außengehäuse (32), das die Brennkammer und den stromabwärtigen Teil außen umgibt,
wobei der Strömungskanal in dem stromabwärtigen Teil (25) außen durch das Außengehäuse (32) begrenzt ist, wobei das Außengehäuse (32) eine Schulter (36) aufweist,
**dadurch gekennzeichnet, dass** an der Schulter (36) die äußere stromabwärtige Kante (37) des Zwischenteils (24) in Anschlag gelangt und dass die gegenüberliegenden Wände des stromaufwärtigen Teils (21) und des Zwischenteils (24) durch einen ersten Flansch (27) und einen zweiten Flansch (28) gebildet sind, wobei dieser erste und zweite Flansch (27, 28) von dem Gehäuse (32) getrennt sind und den Strömungskanal in dem stromaufwärtigen Teil (21) und dem Zwischenteil (24) begrenzen.

2. Turbomaschine nach Anspruch 1, bei der die Richtschaufeln (26) nicht an dem Außengehäuse (32) befestigt sind.

3. Turbomaschine nach Anspruch 1 oder 2, bei der im kalten Zustand zwischen den Richtschaufeln (26) und dem Außengehäuse (32) ein Spiel (J) vorhanden ist.

4. Turbomaschine nach einem der Ansprüche 1 bis 3, bei der die Außenwand (39) des Zwischenteils (24) an dem Außengehäuse (32) in Anlage ist, wobei die Anlageschnittfläche (35) zwischen dieser Außenwand (39) und dem Gehäuse (32) eine Zylinderfläche ist.

5. Turbomaschine nach einem der Ansprüche 1 bis 4, bei der das Außengehäuse (32) einen kegelstumpfförmigen Innenflächenabschnitt (50) gegenüber den Richtschaufeln (26) aufweist.

6. Turbomaschine nach einem der Ansprüche 1 bis 5, bei der der Strömungskanal in dem stromabwärtigen Teil (25) innen durch einen Flansch (27) begrenzt ist, wobei dieser Flansch auch den Strömungskanal in dem stromaufwärtigen Teil (21) und dem Zwischenteil (24) begrenzt.

7. Turbomaschine nach Anspruch 6, bei der der Flansch (27) die Richtschaufeln (26) trägt.

8. Turbomaschine nach Anspruch 6 oder 7, bei der der stromaufwärtige Teil (21) eine Reihe von Diffusionsschaufeln (23) umfasst, die kreisförmig beabstandet sind und zwischen sich die Diffusionsdurchgänge (22) bilden, und bei der der Flansch (27) an diese Diffusionsschaufeln (23) gelötet ist.

## Claims

1. A turbomachine comprising:
· an annular combustion chamber (40);
· a centrifugal compressor (10);
· an annular diffuser (20) enabling the flow of gas leaving the compressor to be diffused and directing this flow of gas towards the combustion chamber, the diffuser comprising: an upstream portion (21) oriented radially and presenting diffusion passages (22) connected to the outlet from the compressor; an intermediate portion (24) that is elbow-shaped; and a downstream portion (25) having a series of circularly spaced-apart flow-straightening vanes (26); and
· an outer casing (32) surrounding the outside of the combustion chamber and the downstream portion;
the flow stream in the downstream portion (25) is delimited externally by the outer casing (32), the outer casing (32) presenting a shoulder (36) **characterized in that** the outer downstream edge (37) of the intermediate portion (24) comes into abutment against said shoulder (36), and **in that** the facing walls of the upstream and intermediate portions (21, 24) are formed by a first end plate (27) and by a second end plate (28), these first and second end plates (27, 28) being distinct from the casing (32) and delimiting the flow stream in the upstream and intermediate portions (21, 24).

2. A turbomachine according to claim 1, in which the flow-straightening vanes (26) are not fastened to the outer casing (32).

3. A turbomachine according to claim 1 or claim 2, in which, when cold there exists clearance (J) between the flow-straightening vanes (26) and the outer casing (32).

4. A turbomachine according to any one of claims 1 to 3, in which the outer wall (39) of the intermediate portion (24) bears against the outer casing (32), the bearing interface (35) between said outer wall (39) and the casing (32) being a cylindrical surface.

5. A turbomachine according to any one of claims 1 to 4, in which the outer casing (32) presents a frustoconical inner surface portion (50) facing the flow-straightening vanes (26).

6. A turbomachine according to any one of claims 1 to 5, in which the flow stream in the downstream portion (25) is delimited internally by an end plate (27), the end plate also delimiting the flow stream in the upstream and intermediate portions (21, 24).

7. A turbomachine according to claim 6, in which said end plate (27) carries the flow-straightening vanes (26).

8. A turbomachine according to claim 6 or claim 7, in which the upstream portion (21) comprises a series of circularly spaced-apart diffusion vanes (23) forming between them said diffusion passages (22), and in which the end wall (27) is brazed to said diffusion vanes (23).
